# EUROPÄISCHE PATENTANMELDUNG

(11) **EP 4 717 414 A1**
(43) Veröffentlichungstag der Anmeldung: **01.04.2026**
(21) Anmeldenummer: 24202499.0
(22) Anmeldetag: 25.09.2024
(51) Int. Cl.: B25J 9/16

(54) **ERKENNUNG UND UMGANG MIT UNBEKANNTEN SITUATIONEN IN EINEM INDUSTRIELLEN UMFELD**

(71) Anmelder: Siemens Aktiengesellschaft, 80333 München (DE)
(72) Erfinder: Geier, Ingo, 90556 Cadolzburg (DE); Teuchert, Matthias, 91056 Erlangen (DE); Tokic, Michel, 88069 Tettnang (DE); von Beuningen, Anja, 99085 Erfurt (DE)
(74) Vertreter: Siemens Patent Attorneys

(57) **Zusammenfassung**

Die Erfindung betrifft ein computer-implementiertes Verfahren, eine computer-implementierte Vorrichtung, ein System und ein Computerprogrammprodukt zum umgebungsspezifischen Bestimmen zumindest einer Handlungsoption eines beweglichen Roboterteils umfassend Erfassen von Informationen, welche mit einer Umgebung des beweglichen Roboterteils assoziiert sind, Konvertieren der erfassten Informationen in eine Beschreibung der Umgebung, Bereitstellen der Beschreibung an ein erstes trainiertes neuronales Netz, Bestimmen, durch das erste trainierte neuronale Netz, der zumindest einen Handlungsoption basierend auf der bereitgestellten Beschreibung, Bestimmen, ob die bereitgestellte zumindest eine Handlungsoption ausreichend definiert ist, um durch das bewegliche Roboterteil ausgeführt zu werden, Initiieren eines Dialogs, mit einer von dem Roboterteil verschiedenen Hilfsentität, um weitere Kontextinformationen zu erfassen, falls bestimmt wurde, dass die bereitgestellte zumindest eine Handlungsoption nicht ausreichend definiert ist und Bereitstellen der zumindest einen Handlungsoption an eine Steuerung des beweglichen Roboterteils.

## Beschreibung

Roboter werden in modernen, industriellen Anlagen für eine Vielzahl auszuführender Aufgaben eingesetzt. Der Einsatz von Robotern umfasst z.B. die Ausführung von Routineaufgaben oder aber die Ausführung von Aufgaben, welche für den Menschen als gesundheitsgefährdend anzusehen sind. Roboter können dabei manuell bedient werden oder führen eine vorab definierte Handlungsabfolge aus, wobei deren Grad an Autonomität variieren kann.

Ein häufiges dabei auftretendes Problem ist es, dass Roboter meist nur mit ihnen bereits bekannten Objekten umgehen können und mit den betreffenden Objekten meist nur vordefinierte Aktionen ausführen können.

Ein Adaptieren vorhandener Roboter an neue Umgebungen mit sich ändernden Anforderungen, (z.B. geänderter, erforderlicher Manipulationsschritte), unbekannten Aufgaben und/oder der Manipulation neuer Objekte gestaltet sich meist komplex. Roboter können meist nicht eigenmächtig Entscheidungen treffen und benötigen diesbezüglich eine Abstimmung mit einem menschlichen Bediener und/oder können nur innerhalb definierter Grenzen agieren.

In anderen Fällen kann es (erforderlich) sein, dass ein menschlicher Arbeiter einen Hauptteil einer auszuführenden Aufgabe erledigen muss und Roboter lediglich unterstützend (im Rahmen vordefinierter Handlungsschritte) zur Lösung der betreffenden Aufgabe beitragen (wie z.B. dem Roboter-basierten Lösen von Schrauben und/oder dem Sortieren von Objekten nach bekannten Eigenschaften).

Es kann für Roboter erforderlich sein, autonom ein Objekt (Art, Typ, Modell, etc.) zu erkennen, bevor basierend darauf, eine Handlungsoption für den Roboter abgeleitet werden kann. Dies kann z.B. ein Erkennen durch einen Roboter umfassen, ob ein Objekt ein Mobiltelefon oder ein Taschenrechner ist, welches/welcher zerlegt und recycled werden soll. Basierend hierauf könnte ein Roboter ableiten, wo jeweils welche Schrauben an dem betreffenden Objekt vorhanden sind, welche für ein Zerlegen des Objekts gelöst werden müssen. Basierend auf der Objekterkennung können somit verschiedene Handlungsoptionen ausgeführt werden, welche ein optimales Zerlegen des betreffenden Objekts ermöglichen können.

Dies kann z.B. dann limitierend sein, wenn ein Roboter zum Zwecke eines Batterie-Recyclings eingesetzt werden soll. Batterien werden meist in unterschiedlichen Größen bzw. Modellen und von verschiedenen Herstellern hergestellt, so dass sich ein weitreichendes Spektrum verschiedener Batteriemodelle ergeben kann, welche durch einen Roboter idealerweise handhabbar sein müssen, um einen Roboter-basierten Recyclingprozess einer Batterie ermöglichen zu können. Da verschiedene Batteriehersteller unterschiedliche Vorgehensweisen haben eine Batterie zusammenzusetzen, ergibt sich hieraus eine Vielfalt möglicher und unbekannter Schritte, welche für einen Recycling-Prozess einer derartigen Batterie einem Roboter bekannt sein müssen. Auch wenn es bis zu einem gewissen Grad einen Überlapp bzw. Gemeinsamkeiten hinsichtlich des Recyclingprozesses verschiedener Batterietypen geben kann, so kann es dennoch erforderlich sein, einen Roboter mit einer entsprechenden Vielzahl von Handlungsoptionen auszustatten, um ein entsprechendes Batterierecycling sicherstellen zu können.

Es kann von besonderer Bedeutung sein, einen Roboter (z.B. mittels einer künstlichen Intelligenz) derart zu programmieren, dass dieser mit variierenden Gegebenheiten umgehen kann, um so z.B. sicher eine Batterie (ggf. eines bislang unbekannten Typs) zu zerlegen bzw. recyclen zu können. Es stellt sich häufig das zugrundeliegende Problem, insbesondere im Umgang mit Unsicherheiten in der Handlungsabfolge eines entsprechenden Roboters, idealerweise, ohne einen menschlichen Bediener einbinden zu müssen.

Während dies bei sehr einfachen Anwendungen möglich ist, scheitern Roboter dennoch an komplexeren Problemstellungen, so dass dennoch ein menschlicher Bediener gewisse Herstellungsschritte oder Manipulationen an einem Objekt durchführen muss, so dass der Roboter darauf aufbauend weitere Manipulationsschritte vornehmen kann. In alternativen Fällen kann es auch sein, dass ein menschlicher Bediener ggf. eine Aufgabe, welche mit einer Manipulation des Objekts assoziiert ist, selbst zu Ende bringen muss. Um in einem derartigen Fall sicherstellen zu können, dass der Roboter die betreffende Situation bei einem möglicherweise erneuten Auftreten des gleichen Problems handhaben kann, bedarf es meist einer entsprechenden Konfiguration des Roboters (und/oder eines Trainings). Diese Konfiguration muss anschließend ausführlichen Tests unterzogen werden (sowohl in Testumgebungen als auch in möglicherweise auftretenden neuen Umgebungen). Anschließend kann es erforderlich sein, den Roboter auszuschalten und mit einem entsprechenden Update zu versehen. Dieses Vorgehen kann jedoch personal- als auch zeitintensiv sein und mit hohen Kosten für die Konfiguration des Roboters verbunden sein.

Liegen Zerlegungspläne für das zu zerlegende Objekt vor (z.B. bei einer Batterie), so können diese bei der Zerlegung mit berücksichtigt werden. Derartige Zerlegungspläne liegen jedoch nicht für alle Objekte vor, so dass diese nur vereinzelt verwendet werden können.

Um eine größere Auswahl an Zerlegungsplänen bereitzustellen, gibt es politische Bestrebungen, Batteriehersteller zum Bereitstellen von Zerlegungsplänen zu verpflichten (im Sinne sog. *battery passports*). Dies könnte ein Zerlegen zukünftig zum Verkauf stehender Batterien ermöglichen, wirkt sich jedoch nicht rückwirkend auf bereits verkaufte Batterien aus, und bietet daher noch keine Verbesserung gegenüber der aktuell vorherrschenden Situation mangelnder Zerlegungspläne für bereits sich im Umlauf befindlicher Batterien. Ferner sind auch Geräte, in welchen die Batterien enthalten sind, nicht von einer Verpflichtung zum Bereitstellen von Zerlegungsplänen umfasst, obwohl auch diese zukünftig zerlegt und recycelt werden müssen.

Die derzeit verwendeten Ansätze zum Roboter-gesteuerten Manipulieren von Objekten kann daher noch nicht in allen (gewünschten) Anwendungsszenarien sichergestellt werden.

Es besteht daher ein Bedarf, eine Steuerung von Robotern, insbesondere im Kontext unbekannter Umgebungen, weiter zu verbessern.

Vor diesem Hintergrund besteht eine Aufgabe der vorliegenden Erfindung darin, die sichere Wechselwirkung von Robotern mit einem Objekt, in Gegenwart vorhandener Unsicherheiten bzgl. einer auszuführenden Handlungsoption, zu ermöglichen.

Gemäß einem ersten Aspekt wird ein computer-implementiertes Verfahren zum umgebungsspezifischen Bestimmen zumindest einer Handlungsoption eines beweglichen Roboterteils vorgeschlagen. Das computer-implementierte Verfahren umfasst ein Erfassen von Informationen, welche mit einer Umgebung des beweglichen Roboterteils assoziiert sind sowie ein Konvertieren der erfassten Informationen in eine Beschreibung der Umgebung. Ferner umfasst das computer-implementierte Verfahren ein Bereitstellen der Beschreibung an ein erstes trainiertes neuronales Netz, ein Bestimmen, durch das erste trainierte neuronale Netz, der zumindest einen Handlungsoption basierend auf der bereitgestellten Beschreibung sowie ein Bestimmen, ob die bereitgestellte zumindest eine Handlungsoption ausreichend definiert ist, um durch das bewegliche Roboterteil ausgeführt zu werden. Das computer-implementierte Verfahren umfasst ferner ein Initiieren eines Dialogs, mit einer von dem Roboterteil verschiedenen Hilfsentität, um weitere Kontextinformationen zu erfassen, falls bestimmt wurde, dass die bereitgestellte zumindest eine Handlungsoption nicht ausreichend definiert ist, sowie ein Bereitstellen der zumindest einen Handlungsoption an eine Steuerung des beweglichen Roboterteils.

Das Roboterteil kann z.B. ein Roboterarm sein, welcher sich z.B. entlang von zumindest einem Freiheitsgrad (z.B. einem rotatorischen und/oder translatorischen) bewegen kann. Alternativ kann das bewegliche Roboterteil z.B. ein Werkzeugteil eines Roboters sein, welches eine rotatorische und/oder eine translatorische Bewegung ausführen kann. In einem derartigen Fall kann das bewegliche Teil z.B. mit einem Werkzeug bereitgestellt werden, welches es bei Rotation des beweglichen Roboterteils ermöglichen kann, eine Schraube eines zu manipulierenden Objekts zu lösen oder festzuziehen. In anderen Fällen kann das Werkzeug derart bereitgestellt werden, dass bei einer Vorwärts- und Rückwärtsbewegung des beweglichen Roboterteils eine Sägefunktion ausgeführt werden kann, z.B. dann, wenn das Werkzeug als Säge(element) bereitgestellt wird.

Unter der zumindest einen Handlungsoption des beweglichen Roboterteils kann eine Bewegung des beweglichen Roboterteils verstanden werden. Diese Bewegung kann z.B. eine rotatorische und/oder eine translatorische Bewegung sein.

Die erfassten Informationen können durch einen oder mehrere Sensoren erfasst werden. Zusätzlich oder alternativ können die erfassten Informationen von einem Server (z.B. von einer Datenbank) geladen werden.

In einigen Fällen kann die Beschreibung als eine textuelle Beschreibung bereitgestellt werden. Unter der textuellen Beschreibung kann eine Beschreibung der erfassten Informationen in Textform verstanden werden. Umfassen die erfassten Informationen z.B. ein oder mehrere Bilder, so kann die textuelle Beschreibung derart bereitgestellt werden, dass diese den Inhalt des Bildes in Textform beschreibt. Dies kann z.B. zum Ausdruck bringen, dass das Bild ein Mobiltelefon, einen Taschenrechner oder ein anderes Gerät abbildet.

Das Bestimmen, ob die zumindest eine Handlungsoption ausreichend definiert ist, kann ein Bestimmen umfassen, ob dem ersten trainierten neuronalen Netz ausreichend Informationen zur Verfügung stehen, um basierend auf den Informationen die zumindest eine Handlungsoption derart zu bestimmen, dass eine gewünschte Manipulation eines Objekts erfolgreich bzw. zielführend ausgeführt werden kann. Das Bestimmen, ob die zumindest eine Handlungsoption ausreichend definiert ist, kann ein Bestimmen eines Parameters umfassen, welcher indikativ für eine ausreichende Definition der zumindest einen Handlungsoption ist. Überschreitet der so bestimmte Parameter einen vordefinierten Schwellenwert, so kann die zumindest eine Handlungsoption als ausreichend definiert angesehen werden.

Das Bestimmen, dass die zumindest eine Handlungsoption nicht ausreichend definiert ist, kann z.B. dann erfolgen, wenn auf Basis der erfassten Informationen nicht eindeutig festgestellt werden kann, welches Objekt durch das bewegliche Roboterteil manipuliert werden soll. Basierend hierauf, kann die zumindest eine Handlungsoption dann als nicht ausreichend definiert angesehen werden, wenn das erste trainierte neuronale Netz nicht mit ausreichender Information darüber versorgt werden kann, welches Objekt (z.B. Typ, Modell, Größe, etc.) und/oder welches Teil des Objekts (z.B. welche Schraube (z.B. Größe, Typ, etc.)) manipuliert werden soll.

In einigen Fällen kann der Dialog mit der Hilfsentität durch Ausgabe von zumindest einer Frage an die Hilfsentität erfolgen. Die Frage kann z.B. mittels einer Anzeige (z.B. eines Displays, Monitors, etc.) und/oder eines Lautsprechers an die Hilfsentität ausgegeben werden. Alternativ kann es auch möglich sein, den Dialog über eine Datenverbindung zu initiieren (z.B. über ein Internet und/oder ein Intranet). In bevorzugten Fällen kann der Dialog ohne einen Kalibrierungsdatensatz initiiert werden. In einigen Fällen kann eine Antwort auf die zumindest eine Frage erfasst werden. Die erfasste Antwort kann als Basis für ein Bestimmen der zumindest einen Handlungsoption (und/oder einer weiteren zumindest einen Handlungsoption) verstanden werden. Die Antwort kann z.B. über eine mit einem neuronalen Netz (z.B. dem ersten neuronalen Netz und/oder dem zweiten neuronalen Netz und/oder einem dritten neuronalen Netz) verbundene Hilfsentität empfangen werden. Das betreffende neuronale Netz kann z.B. eine Spracherkennung (z.B. ein Large Language Model) umfassen.

Dies kann eine verbesserte Handhabung einer unbekannten Situation, aus der Sicht eines beweglichen Roboterteils, ermöglichen. Dies kann dadurch ermöglicht werden, dass ein menschlicher Bediener nicht in einen durch das bewegliche Roboterteil ausgeführten Manipulationsvorgang eingreifen muss, falls eine für das bewegliche Roboterteil unbekannte Situation auftritt (z.B. wenn die zumindest eine Handlungsoption als nicht ausreichend definiert angesehen wird), sondern dass in einem solchen Fall ein Dialog mit einer Hilfsentität initiiert werden kann, basierend auf welchem weitere Informationen angefordert werden können, um auch bei Vorliegen einer unbekannten Situation eine gewünschte Manipulation eines Objekts ausführen und zum Abschluss bringen zu können.

Gemäß einer Ausführungsform kann die Hilfsentität ein menschlicher Bediener des beweglichen Roboterteils sein; ein menschlicher Bediener, welcher sich remote mit dem beweglichen Roboterteil verbinden kann; ein menschlicher Bediener, welcher sich remote mit einem Hilfsroboter in der Umgebung des beweglichen Roboterteils verbinden kann; und/oder ein zweites trainiertes neuronales Netz sein, welches mittels einer größeren Trainingsdatenbasis trainiert wurde als das erste trainierte neuronale Netz.

Ein menschlicher Bediener kann physisch präsent sein, d.h. ein menschlicher Bediener kann sich in unmittelbarer Nähe zu dem beweglichen Roboterteil befinden.

Eine Remoteverbindung zwischen dem beweglichen Roboterteil kann z.B. kabellos und/oder kabelgebunden erfolgen. Die Remoteverbindung kann über das Internet und/oder ein Intranet hergestellt werden.

Der Hilfsroboter kann sich in unmittelbarer Nähe zum beweglichen Roboterteil befinden. Der Hilfsroboter kann mit zumindest einem Sensor ausgestattet sein, welcher dazu eingerichtet sein kann, weitere Informationen zu erfassen, die mit der Umgebung des beweglichen Roboterteils assoziiert sind.

Das zweite trainierte neuronale Netz kann im Vergleich zum ersten neuronalen Netz mit einer höheren Anzahl an Trainingsdaten trainiert worden sein und kann damit schließlich auf eine größere Trainingsdatenbasis zurückgreifen als das erste trainierte neuronale Netz. Dies kann es ermöglichen, dass unter Rückgriff auf das zweite neuronale Netz, eine verbesserte Datenbasis, welche als Hilfsentität fungieren kann, bereitgestellt werden kann, wodurch die zumindest eine Handlungsoption in verbesserter Weise bereitgestellt werden kann.

Dies kann es ermöglichen, unter Rückgriff auf die Hilfsentität, solche Informationen zu erfassen, welche bislang für eine ausreichende Definition der zumindest einen Handlungsoption fehlen, ohne eine, durch das bewegliche Roboterteil auszuführende Manipulation eines Objekts abbrechen zu müssen und/oder durch einen menschlichen Bediener erledigen lassen zu müssen. Auf diese Weise kann das Bestimmen der zumindest einen Handlungsoption und schließlich auch der mittels des beweglichen Roboterteils auszuführenden Manipulationsvorgang verbessert werden.

Gemäß einer weiteren Ausführungsform kann die zumindest eine Handlungsoption des beweglichen Roboterteils mit einem Zerlegungsplan eines elektrischen Geräts und/oder einer Batterie assoziiert sein.

In einigen Fällen kann das Objekt ein elektrisches Gerät und/oder eine Batterie sein.

Ein Zerlegungsplan kann als eine Anleitung fungieren, welche einzelne Schritte aufzeigt, welche der Reihe nach ausgeführt werden können, um das elektrische Gerät und/oder die Batterie zu zerlegen, d.h. in seine einzelnen Bestandteile aufzuteilen. Dies kann ein Recycling des elektrischen Geräts und/oder der Batterie unterstützen.

Auf diese Weise kann ein effizientes und zielgerichtetes Zerlegen des elektrischen Geräts und/oder der Batterie ermöglicht werden.

Gemäß einer weiteren Ausführungsform kann das Bereitstellen der Beschreibung ein Berücksichtigen eines bereitgestellten Zerlegungsplans für das elektrische Gerät und/oder die Batterie umfassen.

In einigen Fällen kann der bereitgestellte Zerlegungsplan in eine Beschreibung umgewandelt werden. Auf diese Weise kann der auszuführende Zerlegungsprozess in Textform beschrieben werden. Die so gewonnene Beschreibung des Zerlegungsplans kann mit der Beschreibung der erfassten Informationen vermischt werden und/oder an die Beschreibung der erfassten Informationen angehängt bzw. konkateniert werden.

Auf diese Weise kann das Bestimmen der zumindest einen Handlungsoption möglichst nahe in Analogie zum bereitgestellten Zerlegungsplan erfolgen. Dies kann insgesamt einen verbesserten Zerlegungsprozess durch das bewegliche Roboterteil ermöglichen.

Gemäß einer weiteren Ausführungsform kann das computer-implementierte Verfahren für jeden Schritt eines mit dem Zerlegungsplan assoziierten Zerlegungsschritts ausgeführt werden.

In einigen Fällen kann die zumindest eine Handlungsoption einen Zerlegungsschritt gemäß des Zerlegungsplans abbilden.

Auf diese Weise kann für jeden Zerlegungsschritt eine optimierte zumindest eine Handlungsoption für das bewegliche Roboterbauteil bestimmt werden. Dies kann den Zerlegungsprozess optimieren.

Gemäß einer weiteren Ausführungsform kann das erste trainierte neuronale Netz und/oder das zweite trainierte neuronale Netz ein Large Language Model, LLM, bevorzugt einen generative pre-trained transformer, GPT, umfassen.

Dies kann zu einem optimalen initiieren des Dialogs mit der Hilfsentität beitragen.

Das erste trainierte neuronale Netz und/oder das zweite trainierte neuronale Netz kann alleinig aus dem LLM (bevorzugt aus dem GPT) bestehen oder dieses, neben anderen Komponenten (z.B. einem weiteren dritten neuronalen Netz), umfassen.

Dies kann eine effiziente Verarbeitung textueller Informationen ermöglichen.

Gemäß einer weiteren Ausführungsform kann das Erfassen der Informationen ein Erfassen eines Objekttyps eines Objekts, welches durch das bewegliche Roboterteil manipuliert werden soll und/oder ein Erfassen eines Herstellers des Objekts und/oder eine Lage des Objekts in der Umgebung umfassen.

Unter dem Objekttyp kann vorliegend die Art des vorliegenden, durch das bewegliche Roboterteil zu manipulierenden Objekts verstanden werden. Unter einer Art kann z.B. die Objektkategorie verstanden werden, wie z.B. ob das Objekt ein Mobiltelefon, ein Taschenrechner, eine Batterie, etc. ist.

In einigen Fällen kann das Erfassen ein Erfassen einer Dimensionierung des zu manipulierenden Objekts verstanden werden.

Unter einer Lage des Objekts in der Umgebung kann eine Orientierung des Objekts relativ zu einem Referenzsystem (z.B. einer Referenzachse) verstanden werden. Das Erfassen der Informationen kann ein Bestimmen umfassen, um welche Raumwinkel das Objekt relativ zu dem Referenzsystem (bzw. der Referenzachse) rotiert (und/oder verschoben) vorliegt.

Durch Erfassen des Objekttyps kann festgestellt werden, welches Objekt durch das bewegliche Roboterteil manipuliert werden soll. Ferner kann aus dem erfassten Objekttyp abgeleitet werden, welche Dimensionen (z.B. metrische und/oder imperiale Abmessungen) das Objekt aufweist und an welcher Stelle des Objekts welche Teile (z.B. Schrauben, Klebestellen, etc.) zu erwarten sind. Ein Bestimmen der Lage des Objekts kann ein Bestimmen einer Orientierung des Objekts relativ zu z.B. einem Werkzeug, welches an dem beweglichen Roboterteil befestigt ist, umfassen.

Gemäß einer weiteren Ausführungsform kann das computer-implementierte Verfahren, wenn das Erfassen der Informationen ein Erfassen eines Objekttyps eines Objekts umfasst, ferner ein Bestimmen einer ersten Unsicherheit umfassen, welche indikativ ist für eine Unsicherheit mit welcher ein erfasstes Objekt einem Objekttyp zugeordnet wurde und wobei, wenn die erste bestimmte Unsicherheit einen ersten Schwellenwert überschreitet, ein Ausführen, durch das bewegliche Roboterteil, der bestimmten zumindest einen Handlungsoption erfolgt. Wenn die erste bestimmte Unsicherheit den ersten Schwellenwert unterschreitet und einen zweiten Schwellenwert überschreitet, kann ein Anfragen einer Bestätigung, von einem menschlichen Bediener erfolgen, dass die bestimmte zumindest eine Handlungsoption ausgeführt werden soll, woran sich ein Ausführen, basierend auf der Bestätigung, der zumindest einen Handlungsoption anschließen kann. Alternativ, wenn die bestimmte erste Unsicherheit kleiner als der zweite Schwellenwert ist, kann ein Bereitstellen zumindest einer vordefinierten Handlungsoption an einen menschlichen Bediener erfolgen, ein Erfassen einer Bestätigung, von dem menschlichen Bediener, dass die bereitgestellte vordefinierte Handlungsoption ausgeführt werden soll, sowie ein Ausführen der vordefinierten Handlungsoption basierend auf der erfassten Bestätigung.

Unter der ersten Unsicherheit kann vorliegend ein (numerischer) Parameter verstanden werden, welcher angibt, mit welcher Wahrscheinlichkeit eine Zuordnung des Objekts zu einem Objekttyp falsch ist, d.h. mit welcher Wahrscheinlichkeit das zugeordnete Objekt eigentlich einem anderen Objekttyp zuzuordnen ist als es tatsächlich zugeordnet wurde. Der numerische Parameter kann sich in einem Bereich von 0 % - 100 % bewegen, wobei eine Wahrscheinlichkeit von 0 % angibt, dass die Zuordnung als nicht vertrauensvoll bzw. unsicher anzusehen ist und wobei eine Wahrscheinlichkeit von 100 % angibt, dass die Zuordnung als sehr vertrauensvoll anzusehen ist.

In einigen Fällen kann das Erfassen des Objekttyps ein Klassifizieren des Objekttyps basierend auf den erfassten Informationen umfassen. Unter einem Klassifizieren kann vorliegend ein Verfahren verstanden werden, bei dem ein computerbasiertes System anhand von Algorithmen und Modellen des maschinellen Lernens Objekte, Daten oder Situationen automatisch in vordefinierte Kategorien oder Klassen einordnet. Dieses Verfahren kann auf der Analyse von Merkmalen oder Eigenschaften der zu klassifizierenden Elemente und der Erkennung von Mustern in den Eingabedaten basieren. Das System wird dabei typischerweise mit einer Menge bereits klassifizierter Beispiele trainiert, um aus diesen Lerndaten Regeln oder Entscheidungskriterien abzuleiten, die es ihm ermöglichen, neue, unbekannte Instanzen den entsprechenden Klassen zuzuordnen. Ziel ist es, eine möglichst präzise und zuverlässige Zuordnung zu erreichen, die es erlaubt, komplexe Entscheidungs- und Erkennungsaufgaben zu automatisieren und auf neue Situationen zu generalisieren.

Das Erfassen des Objekttyps kann auf einer Klassifikation basieren, wie hierin beschrieben.

Auf diese Weise kann ein Kontext-spezifisches Ausführen der bestimmten zumindest einen Handlungsoption ausgeführt werden.

Gemäß einer weiteren Ausführungsform kann das Bestimmen der zumindest einen Handlungsoption ferner ein Bestimmen einer zweiten Unsicherheit, welche mit dem Bestimmen der zumindest einen Handlungsoption assoziiert ist, umfassen.

Unter der zweiten Unsicherheit kann vorliegend ein (numerischer) Parameter verstanden werden, welcher angibt, ob die bestimmte zumindest eine Handlungsoption als optimale Handlungsoption angesehen werden kann. Der numerische Parameter kann sich dabei in einem Bereich von 0 % - 100 % bewegen, wobei eine Wahrscheinlichkeit von 0 % angibt, dass die Zuordnung als nicht optimal anzusehen ist und wobei eine Wahrscheinlichkeit von 100 % angibt, dass die Zuordnung als optimal anzusehen ist.

Die zweite Unsicherheit kann dadurch verursacht werden, dass das erste trainierte neuronale Netz, bei wiederholtem Bereitstellen der Beschreibung an das erste trainierte neuronale Netz, eine unterschiedliche zumindest eine Handlungsoption bereitstellen kann. In einigen Fällen kann das erste trainierte neuronale Netz nicht direkt befragt werden, sondern lediglich über ein Application Programming Interface (API). Kann das erste neuronale Netz hingegen direkt befragt werden, so kann das erste neuronale Netz eine Ausgabe bereitstellen, welche eine diskrete Wahrscheinlichkeitsverteilung über die Aktivierungsstärke aller Token (d.h. Buchstaben) im zugrundeliegenden Alphabet angibt. In einigen Fällen kann basierend hierauf die Unsicherheit des ersten neuronalen Netzes bestimmt werden. Ergibt sich über verschiedene Token hinweg eine gleichverteilte Aktivierungsstärke, so kann dies als Indiz dafür angesehen werden, dass sich das erste neuronale Netz unsicher ist, bzgl. einer Zuordnung der Ausgabe des ersten neuronalen Netzes zu einer betreffenden Eingabe.

Dies kann zu einer verbesserten Aussagekraft der bestimmten zumindest einen Handlungsoption beitragen.

Gemäß einer weiteren Ausführungsform kann das Bereitstellen der Beschreibung und das Bestimmen der zumindest einen Handlungsoption N-Mal, mit *N* ≥ 1, wiederholt werden, wobei ein Bereitstellen der zumindest einen Handlungsoption basierend auf der N-maligen Wiederholung des Bereitstellens der Beschreibung und des Bestimmens der zumindest einen Handlungsoption erfolgen kann.

Das N-malige wiederholte Ausführen des Bereitstellens kann ein N-maliges Bereitstellen der Beschreibung an das erste trainierte neuronale Netz umfassen, sodass entsprechend N-Mal zumindest eine Handlungsoption bereitgestellt wird.

Auf diese Weise kann in effizienter Weise eine statistische Auswertung des Bestimmens der zumindest einen Handlungsoption bereitgestellt werden und somit die Zuverlässigkeit des Bestimmens einer als optimal anzusehenden zumindest einen Handlungsoption verbessert werden.

Gemäß einer weiteren Ausführungsform kann das Bereitstellen der zumindest einen Handlungsoption ferner ein Bestimmen einer Häufigkeitsverteilung der N bestimmten Handlungsoptionen, ein Bestimmen einer Handlungsoption der N bestimmten Handlungsoptionen, welche mit einer maximalen Häufigkeit bestimmt wurde, sowie ein Bereitstellen der bestimmten zumindest einen Handlungsoption umfassen.

Die Häufigkeitsverteilung kann als Histogramm bereitgestellt werden, wobei eine Häufigkeit einer bestimmten zumindest einen Handlungsoption gegen die jeweilige bestimmte zumindest eine Handlungsoption aufgetragen werden kann.

Das Bereitstellen der zumindest einen Handlungsoption kann ein Bereitstellen der zumindest einen Handlungsoption umfassen, welche gemäß der bestimmten Häufigkeitsverteilung die höchste Häufigkeit aufweist.

Auf diese Weise kann die Zuverlässigkeit des finalen Bereitstellens der zumindest einen Handlungsoption verbessert werden.

Gemäß einem zweiten Aspekt wird ein Computerprogrammprodukt vorgeschlagen, umfassend Befehle, die bei der Ausführung des Programms durch einen Computer diesen veranlassen, das Verfahren nach einem der Aspekte/Ausführungsformen, wie hierin beschrieben, auszuführen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen

Gemäß einem dritten Aspekt wird eine computer-implementierte Vorrichtung zum umgebungsspezifischen Bestimmen zumindest einer Handlungsoption eines beweglichen Roboterteils vorgeschlagen. Die computer-implementierte Vorrichtung umfasst eine Erfassungseinheit zum Erfassen von Informationen, welche mit einer Umgebung des beweglichen Roboterteils assoziiert sind, eine Konvertierungseinheit zum Konvertieren der erfassten Informationen in eine Beschreibung der Umgebung, eine erste Bereitstellungseinheit zum Bereitstellen der textuellen Beschreibung an ein erstes trainiertes neuronales Netz und eine erste Bestimmungseinheit zum Bestimmen, durch das erste trainierte neuronale Netz, der zumindest einen Handlungsoption basierend auf der bereitgestellten Beschreibung. Ferner umfasst die computer-implementierte Vorrichtung eine zweite Bestimmungseinheit zum Bestimmen, ob die bereitgestellte zumindest eine Handlungsoption ausreichend definiert ist, um durch das bewegliche Roboterteil ausgeführt zu werden, eine Initiierungseinheit zum Initiieren eines Dialogs mit einer von dem Roboterteil verschiedenen Hilfsentität, um weitere Kontextinformationen zu erfassen, falls bestimmt wurde, dass die bereitgestellte zumindest eine Handlungsoption nicht ausreichend definiert ist sowie eine zweite Bereitstellungseinheit zum Bereitstellen der zumindest einen Handlungsoption an eine Steuerung des beweglichen Roboterteils.

Die jeweilige Einheit, zum Beispiel die Erfassungseinheit, die Konvertierungseinheit, die erste Bestimmungseinheit, die zweite Bestimmungseinheit, die erste Bereitstellungseinheit die Initiierungseinheit und/oder die zweite Bereitstellungseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Unter der Umgebung des beweglichen Roboterteils kann eine Fabrikhalle verstanden werden, in welcher sich das beweglich Roboterteil befindet. Zusätzlich oder alternativ kann die Umgebung ein Objekt umfassen, welches mittels des beweglichen Roboterteils manipuliert werden soll.

Gemäß einer ersten Ausführungsform kann die computer-implementierte Vorrichtung ferner eine erste Ausführungseinheit zum Ausführen des computer-implementierten Verfahrens nach einem der Aspekte/Ausführungsformen, wie hierin beschrieben, umfassen und/oder eine zweite Ausführungseinheit zum Ausführen des Computerprogrammprodukts einem der Aspekte/Ausführungsformen, wie hierin beschrieben.

Die erste Ausführungseinheit und/oder die zweite Ausführungseinheit kann z.B. als Computer, Prozessor, Field Programmable Gate Array (FPGA) oder eine Kombination davon vorgesehen sein.

Gemäß einem vierten Aspekt wird ein System zum umgebungsspezifischen Bestimmen zumindest einer Handlungsoption eines beweglichen Roboterteils vorgeschlagen. Das System umfasst die Computer-implementierte Vorrichtung wie hierin beschrieben und das Computerprogrammprodukt wie hierin beschrieben.

Auch wenn die hierin beschriebenen Ausführungsformen isoliert dargestellt werden, so können diese jedoch auch beliebig miteinander kombiniert werden.

Die für die vorgeschlagene Vorrichtung beschriebenen Ausführungsformen und Merkmale gelten für das vorgeschlagene Verfahren entsprechend und umgekehrt.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt ein schematisches Ablaufdiagramm für ein Verfahren zum umgebungsspezifischen Bestimmen zumindest einer Handlungsoption eines beweglichen Roboterteils;
Fig. 2 zeigt eine exemplarische Verwendung eines GPT-basierten Sprachmodells;
Fig. 3 zeigt ein computer-implementiertes Verfahren;
Fig. 4 zeigt eine computer-implementierte Vorrichtung; und
Fig. 5 zeigt ein System.

In den Figuren sind gleiche oder funktionsgleiche Elemente mit denselben Bezugszeichen versehen worden, sofern nichts anderes angegeben ist.

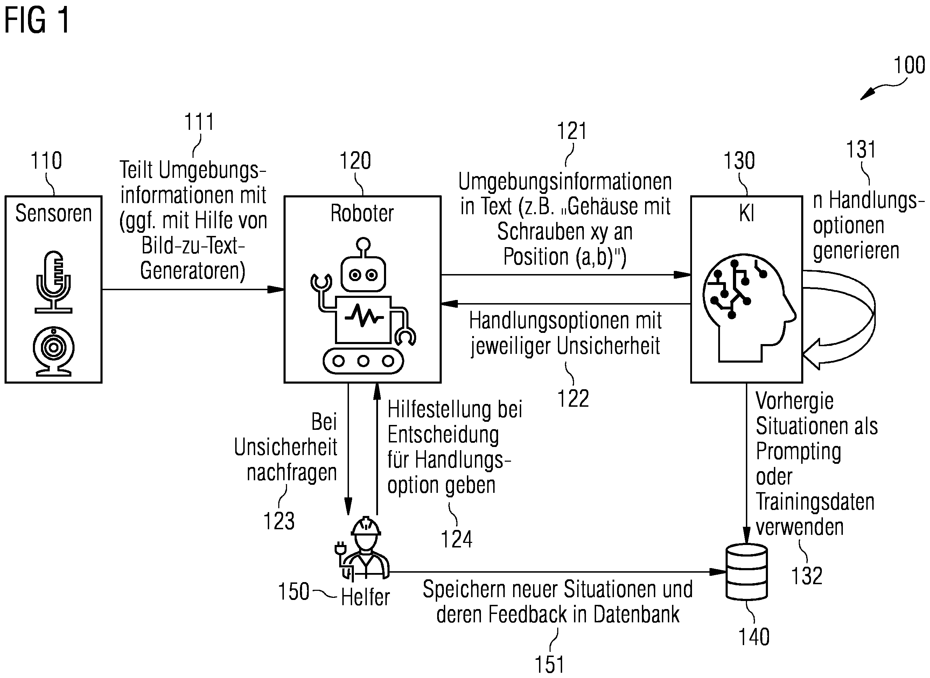

Fig. 1 zeigt ein schematisches Ablaufdiagramm 100 für ein Verfahren zum umgebungsspezifischen Bestimmen zumindest einer Handlungsoption eines beweglichen Roboterteils.

Der schematische Ablauf beginnt mit dem Erfassen von Informationen, welche mit der Umgebung des beweglichen Roboterteils assoziiert sind. Diese Informationen können mittels zumindest einem Sensor 110 erfasst werden. Sensor 110 kann z.B. eine Kamera (eine Echtfarbenkamera und/oder eine IR-Kamera) sein, ein Mikrophon, ein Vibrationssensor, ein Abstandssensor (Licht- und/oder Ultraschall-basiert), ein Temperatursensor, etc. Basierend auf dem zumindest einen Sensor 110 können die erfassten Informationen somit Bildinformationen, Toninformationen, etc. umfassen. Die dadurch erfasste Information kann ein einzelnes Kamerabild und/oder eine einzelne Tonsequenz sein. Die erfassten Informationen können Informationen über ein zu manipulierendes Objekt umfassen (z.B. einen Objekttyp und/oder eine Lageinformation des Objekts), welches in der Umgebung enthalten ist.

Der zumindest ein Sensor 110 kann mit einem Roboter 120 in unidirektionaler oder bidirektionaler Kommunikation 111 stehen. Für die Kommunikation 111 des zumindest einen

Sensors 110 und dem Roboter 120 können die mittels des Sensors 110 erfassten Informationen in eine Beschreibung (z.B. eine textuelle Beschreibung) der somit abgebildeten Umgebung umgewandelt werden (z.B. mit Hilfe von Bild-zu-Text-Generatoren, wie z.B. einem LLM oder einem GPT wie hierin beschrieben). Auf diese Weise kann eine Beschreibung der durch den zumindest einen Sensor 110 erfassten Umgebungsinformation erfolgen. Bei dieser Vorgehensweise kann z.B. ein aufgenommenes Kamerabild durch bekannte Neuromodelle in eine für das Sprachmodell verständliche Textform überführt werden, die das aufgenommene Bild präzise beschreibt. Es kann erforderlich sein, das zugrundeliegende Modell passend zur Aufgabe zu trainieren (z.B. durch Übergeben der Metainformation *"Im Bild an Position der Boundingbox ((x,y), (x+delta_x, y+delta_y)) befindet sich eine Batterie vom Hersteller ABC und Typ XYZ. Diese ist oberflächlich mit Schrauben an Positionen (p1, p2, p3, p4) verschraubt, wofür das Werkzeug CDE benötigt wird*" an das zu trainierende Modell). Idealerweise ist eine zum Erfassen eines entsprechenden Bildes ausgestattete Kamera derart beschaffen, dass alle relevanten, oberflächlichen Merkmale erfasst werden können. Der so generierte Text bzw. die Beschreibung kann die Grundlage für eine Eingabe (engl.: *prompt*) an ein GPT (wie hierin beschrieben) darstellen.

Information kann vorliegend eine Vielzahl von Kamerabildern und/oder eine Vielzahl von Tonsequenzen umfassen.

Die durch den (zumindest einen) Sensor 110 erfassten Informationen können, basierend auf der Kommunikation, mit dem Roboter 120 geteilt werden. Roboter 120 kann zumindest ein bewegliches Roboterteil umfassen und/oder mit diesen in Kommunikation stehen, um dieses anzusteuern und zu einer Bewegung zu veranlassen.

Der Roboter 120 kann die Beschreibung, welche durch den Sensor 110 erfasst wurde, in eine explizite Umgebungsbeschreibung 121 umwandeln und dies einer künstlichen Intelligenz 130 mitteilen. Die explizite Umgebungsbeschreibung 121 kann eine Beschreibung der Merkmale der Umgebung enthalten, welche für einen nachfolgenden Manipulationsvorgang eines Objekts durch (zumindest das bewegliche Roboterteil) des/den Roboters 120 erfolgen soll. Dies kann z.B. eine Aussage der Form "*Gehäuse mit Schrauben xy an Position (a,b)"* umfassen. Dies bedeutet, dass die Beschreibung zum einen Informationen darüber enthalten kann, um welches Objekt es sich bei dem zu manipulierenden Gegenstand handelt (z.B. um ein Gehäuse) und zum anderen welche Komponenten das Objekt enthält, welche durch das bewegliche Roboterteil manipuliert werden sollen (z.B. Schrauben "*xy*")*.* Ferner kann die Beschreibung Informationen darüber enthalten, an welcher Position die Komponenten lokalisiert sind, welche durch das bewegliche Roboterteil manipuliert werden sollen. Ferner kann die explizite Umgebungsbeschreibung um Informationen aus einer Zerlegungsanleitung (z.B. für das betreffende Modell und/oder ähnliche Modelle) angereichert werden. Die so zu erzeugende Eingabe kann eine Formatierung in einem standardisierten Eingabeformat (z.B. im "csv"-Format) erfordern.

In einigen Fällen kann das Zusammenwirken der textuellen Umgebungsinformationen, welche mittels Kommunikation 111 bereitgestellt werden, und der Umgebungsbeschreibung 121 als textuelle Beschreibung, wie hierin beschrieben, verstanden werden.

Die künstliche Intelligenz 130 kann z.B. als ein erstes neuronales Netz bereitgestellt werden. Die künstliche Intelligenz 130 kann derart konfiguriert sein, basierend auf der Beschreibung zumindest eine Handlungsoption 131 zu bestimmen.

Die zumindest eine Handlungsoption 131 kann, basierend auf der bereitgestellten Beschreibung, eine Bewegung zumindest des beweglichen Roboterteils des Roboters 120 beschreiben, welche zu einer, ausgehend von der vorliegenden Situation, als optimal anzusehenden Manipulation des Objekts führen kann.

In einigen Fällen kann die Beschreibung N-mal (wie hierin beschrieben) an die künstliche Intelligenz 130 bereitgestellt werden. In einem derartigen Fall kann ein N-maliges Bereitstellen der zumindest einen Handlungsoption 131 erfolgen.

Das Bestimmen der zumindest einen Handlungsoption 131 kann ferner ein Bestimmen einer mit der zumindest einen Handlungsoption 131 assoziierten Unsicherheit umfassen. Die Unsicherheit kann bereitgestellt werden, wie hierin beschrieben.

In einigen Fällen kann die künstliche Intelligenz 130 auf vorherige Situationen als Prompting und/oder Trainingsdaten 132 zurückgreifen.

Unter Prompting kann eine Generierung, Verarbeitung und/oder Optimierung von Beschreibungen oder Eingabeaufforderungen, die als Grundlage für die Interaktion mit künstlichen Intelligenz-Systemen oder Sprachmodellen dienen, verstanden werden. Dieser Prozess kann die Formulierung, Strukturierung und Anpassung von Textelementen, die darauf abzielen, eine präzise, zielgerichtete und kontextbezogene Ausgabe oder Reaktion einer künstlichen Intelligenz (z.B. der künstlichen Intelligenz 131) zu erzeugen, umfassen. Vorliegend kann das Prompting ein Verwenden einer Eingabe an die künstliche Intelligenz 130 umfassen, welche zur Ausgabe von zumindest einer Handlungsoption 131 führt, welche als optimal anzusehen ist.

Dies bedeutet, basierend auf bereits historisch verwendeten Zuordnungen von Beschreibung und einer bestimmten zumindest einen Handlungsoption (im Sinne von Trainingsdaten), kann eine zumindest eine Handlungsoption 131 für einen aktuell vorliegenden Anwendungsfall bestimmt werden.

Die entsprechenden Trainingsdaten bzw. die mit dem Prompting assoziierten Informationen können in einer Datenbank 140 vorgehalten werden.

Die bestimmte zumindest eine Handlungsoption 131 (optional zusammen mit der bestimmten dazugehörigen Unsicherheit) kann an den Roboter 120 (und damit das bewegliche Roboterteil) als Nachricht 122 übermittelt werden.

Basierend auf der mittels der Nachricht 122 übermittelten zumindest einen Handlungsoption 131 kann der Roboter 120 (bzw. das bewegliche Roboterteil) bestimmen, ob die bereitgestellte zumindest eine Handlungsoption 131 ausreichend definiert ist, um durch den Roboter 120 bzw. das bewegliche Roboterteil ausgeführt zu werden.

Wird bestimmt, dass die zumindest eine Handlungsoption 131 nicht ausreichend definiert ist, so kann der Roboter 120 (bzw. das bewegliche Roboterteil) einen Dialog initiieren und z.B. eine Frage 123 an eine Hilfsentität 150 übermitteln. Die Frage 123 kann so formuliert sein, dass diese gezielt auf ein Gewinnen von Informationen abzielt, welche eine ausreichende Definition der zumindest einen Handlungsoption 131 ermöglichen, so dass die zumindest eine Handlungsoption 131 durch den Roboter 120 (bzw. das bewegliche Roboterteil) ausgeführt werden kann.

Die Hilfsentität 150 kann bereitgestellt werden, wie hierin beschrieben. Diese kann z.B. als ein menschlicher Bediener bereitgestellt werden, welcher sich in einer Nähe des Roboter 120 befinden kann (z.B. im gleichen Gebäude). Es kann sich jedoch auch um einen Menschen handeln, welcher sich remote mit dem Roboter verbinden kann und dadurch mit ihm interagieren kann. Der menschliche Bediener kann Zugang zu einem Eingangssignal (Kamera, live Tonsequenz) und ggf. zusätzlichen Informationen (z.B. Attribute, Protokolldateien, etc.) des Roboters 120 haben. In einigen Fällen kann die Hilfsentität 150 auch als ein menschlicher Bediener bereitgestellt werden, welcher sich remote zu einem anderen Hilfsroboter in der Nähe des ersten Roboters (d.h. des Roboter 120) verbinden kann, wobei der Hilfsroboter konfiguriert sein kann zusätzliche Arbeiten auszuführen. In einigen Fällen kann die Hilfsentität 150 eine künstliche Intelligenz (z.B. ein zweites trainiertes neuronales Netz) sein, welches z.B. Zugriff auf eine größere Datenbasis hat (z.B. eine größere Trainingsdatenbasis) oder mehr Hintergrundwissen über Objekte und Materialien der zu lösenden Aufgabe umfasst (wie z.B. online GPT-Dienste).

Basierend auf der Eingabe der Hilfsentität 150 kann eine Hilfestellung 124 für die Entscheidung für eine Handlungsoption erfolgen.

In einigen Fällen kann das Bestimmen der zumindest einen Handlungsoption 131 mit dem Bestimmen einer (ersten) Unsicherheit assoziiert sein, welche indikativ für eine Unsicherheit ist, mit welcher ein erfasstes Objekt einem Objekttyp zugeordnet wurde. Die bestimmte Unsicherheit kann mit einer Unsicherheit assoziiert sein, mit welcher eine Klassifikation des Objekts durchgeführt wurde.

Die Unsicherheit kann z.B. durch den verwendeten Klassifikator bestimmt werden. Dieser kann in einigen Fällen so konfiguriert sein, dass dieser neben dem Klassifikationsergebnis auch eine Unsicherheit (z.B. eine Modellausgabe welche auf Basis einer negativ-log-likelihood Loss-Funktion trainiert wurde oder abgeleitet aus der Verteilung der Aktivierungsstärke über alle möglichen Ausgabeklassen des Klassifikatornetzes) berechnet und bereitstellt. Die so erhaltene Unsicherheit kann dann das weitere Vorgehen bestimmen.

Eine bestimmte Unsicherheit (in Prozent) kann sich mit einer bestimmten Sicherheit (in Prozent) zu 100 % (bzw. äquivalent zu 1) addieren. Dies kann insbesondere bedeuten, dass eine Sicherheit aus einer bestimmten Unsicherheit über die Beziehung 100 % minus der bestimmten Unsicherheit abgeleitet werden kann und umgekehrt.

Wenn die erste bestimmte Sicherheit einen ersten Schwellenwert überschreitet (z.B. 95 %) und der Objekttyp bevorzugt nicht als *"unbekannt"* klassifiziert wurde, kann ein Ausführen der zumindest einen Handlungsoption 131, durch das bewegliche Roboterteil, der bestimmten zumindest einen Handlungsoption erfolgen. In einem solchen Fall kann das zugrundeliegende Klassifikationsergebnis als sicher angesehen werden. In einigen Fällen kann auf eine Datenbank von Zerlegungsplänen für bekannte Objekte zurückgegriffen werden. Derartige Pläne können von einem jeweiligen Hersteller des Objekts bereitgestellt werden. Zusätzlich oder alternativ kann der Zerlegungsplan bei vorherigen Zerlegungsprozessen gelernt worden sein oder aus weiteren Quellen (z.B. Zerlegungsvideos bzw. textuelle Zerlegungsanleitungen von einem Hersteller des Herstellers des Objekts, Onlinevideos, und/oder Zerlegungsanleitungen, welche auf einschlägigen Portalen veröffentlicht wurden und/oder anderen geeigneten Quellen) entnommen worden sein.

Wenn die erste bestimmte Sicherheit den ersten Schwellenwert unterschreitet und einen zweiten Schwellenwert überschreitet (z.B. 75 %) kann ein Anfragen einer Bestätigung, von einem menschlichen Bediener erfolgen, dass die bestimmte zumindest eine Handlungsoption ausgeführt werden soll, woran sich ein Ausführen, basierend auf der Bestätigung, der zumindest einen Handlungsoption anschließen kann. In einem derartigen Fall kann das Klassifikationsergebnis als relativ sicher angesehen werden. In einigen Fällen kann es in diesem Szenario vorkommen, dass das Klassifikationsergebnis des Objekts einer oder mehreren Objektklassen zugeordnet werden kann. In einem derartigen Fall kann der Roboter 120 von einem menschlichen Bediener und/oder der Hilfsentität 150 eine Bestätigung anfordern, dass das Objekt einer bestimmten Objektklasse zuzuordnen ist. Diese Bestätigung kann durch den menschlichen Bediener und/oder die Hilfsentität 150 in verbaler Form entgegengenommen werden (z.B. durch "*Du hast die Situation richtig erkannt*")*.* Basierend darauf kann der Roboter 120 (bzw. ein bewegliches Roboterteil) die betreffende zumindest eine Handlungsoption entsprechend ausführen. In einigen Fällen können die hierbei anfallenden Daten (z.B. die einer gegebenen Situation zugeordnete Bestätigung durch den menschlichen Bediener und/oder die Hilfsentität 150) gespeichert werden und ggf. für ein Nachtraining verwendet werden, um in zukünftigen (ähnlichen) Situation verbessert reagieren zu können.

Alternativ, wenn die bestimmte erste Sicherheit kleiner als der zweite Schwellenwert ist, kann ein Bereitstellen zumindest einer vordefinierten Handlungsoption an einen menschlichen Bediener erfolgen, ein Erfassen einer Bestätigung, von dem menschlichen Bediener, dass die bereitgestellte vordefinierte Handlungsoption ausgeführt werden soll, sowie ein Ausführen der vordefinierten Handlungsoption basierend auf der erfassten Bestätigung. In einigen Fällen können dem menschlichen Bediener (z.B. Hilfsentität 150) auch eine Vielzahl möglicher, vordefinierter Handlungsoptionen vorgeschlagen werden. In einem derartigen Fall kann das Klassifikationsergebnis als (sehr) unsicher angesehen werden, d.h. die Wahrscheinlichkeit, dass das Objekt korrekt irgendeiner Objektklasse zugeordnet werden kann, ist für alle Klassen als niedrig anzusehen oder die Klassifizierung führt zu dem Ergebnis "*unbekannt*"*.* In diesem Fall kann es auch möglich sein, die dadurch gewonnen Informationen zu speichern und bei (ähnlichen) zukünftigen Fällen darauf zurückzugreifen.

Wie zuvor beschrieben, kann es ferner möglich sein, dass die Hilfsentität 150 möglicherweise bislang unbekannte Handlungsoptionen als valide verifiziert und bestätigt. Dies kann mit einem Speichern 151 der neuen Situation in einer Datenbank (z.B. der Datenbank 140) einhergehen.

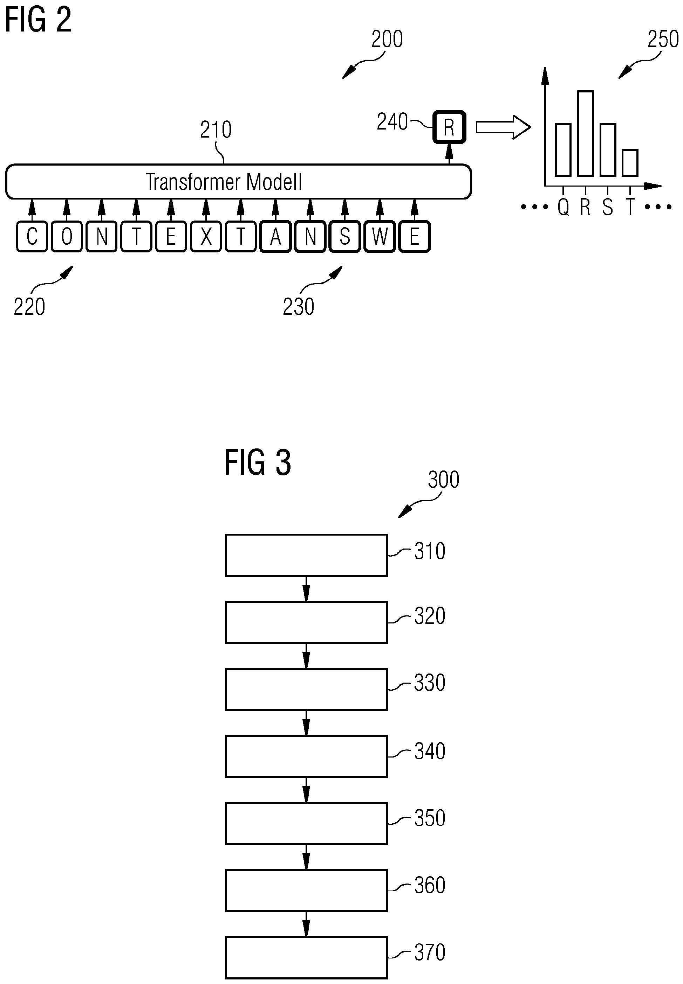

Fig. 2 zeigt die exemplarische Verwendung 200 eines GPT-basierten Sprachmodells. Die Verwendung 200 kann auf einer Verwendung einer aleatorischen Unsicherheit basieren, welche aus einem wiederholten (z.B. n-maligen) Bereitstellen einer textuellen Beschreibung an das erste neuronale Netz resultiert.

Im vorliegenden Fall kann einem Sprachmodell 210 (z.B. ein GPT-Sprachmodell) eine Eingabe 220 *"CONTEXT"* übergeben werden. Die Eingabe 220 kann dem Sprachmodell 210 N-Mal übergeben werden. Von dem Sprachmodell 210 kann basierend darauf für jede der Eingaben je eine Ausgabe gewürfelt werden, so dass sich schließlich N Ausgaben ergeben. Aus den so erhaltenen Ausgaben kann eine Verteilungsfunktion gebildet werden.

Jede der zumindest einen Handlungsoption kann aus mehreren Interferenzschritten bestehen, da das Sprachmodell 210 z.B. nur eine Verteilung über die Wahrscheinlichkeiten für den nächsten Token (z.B. den nächsten Buchstaben) liefern kann, was z.B. aus einer Logits-Repräsentation durch Anwenden einer Softmax-Funktion in eine Wahrscheinlichkeitsverteilung überführt wird. Durch n-maliges Übergeben der Eingabe "CONTEXT" an die Modelleingabe kann man somit m, mit m ≤ *n* (aufgrund eines standardisierten Ausgabeformats), verschiedene Handlungsoptionen erhalten. Dies kann dazu führen, dass bei wiederholter Eingabe *"CONTEXT"* an das Sprachmodell 210, zusammen mit der bereits erhaltenen Antwort 230 (vorliegend *"ANSWER"*) verschiedene weitere Buchstaben 240 (vorliegend "R") erzeugt werden können. Basierend hierauf kann über die so erhaltenen Buchstaben eine Häufigkeitsverteilung 250 erzeugt werden, bei welcher die (relative) Häufigkeit für verschiedene durch das Sprachmodell 210 erzeugte Ausgaben gegen die jeweiligen, unterschiedlichen Ausgaben (z.B. Q, R, S, T, etc.) aufgetragen wird. Dies kann letztlich zum Bestimmen einer jeweils unterschiedlichen zumindest einen Handlungsoption beitragen.

Basierend hierauf kann es ermöglicht werden, aus einer relativen Häufigkeit, der aus dem Interferenzprozess gewonnen Handlungsoptionen, die zugrundeliegende aleatorische Unsicherheit abzuleiten, z.B. basierend auf der Feststellung, wie häufig, in Prozent gemessen, die am häufigsten gewürfelte Handlungsoption vorkommt, relativ gesehen zu den anderen möglichen m-1 Optionen.

Ist eine Ausgabe des Modells bereits bekannt (und/oder ist bereits bekannt, welche Ausgabe das Modell vsl. erzeugen wird), so kann auch direkt die zur Ausgabe erzeugte Verteilung der Aktivierungsstärke über alle Token betrachtet werden.

In einigen Fällen kann es vorkommen, dass die Antwort des Sprachmodells 210 lang wird (z.B. mehr als 5, 10, 15, 20, 25, 30, 50, 100 oder mehr als 150 Buchstaben umfasst), so kann es zu einem exponentiellen Wachstum der möglichen durch das Sprachmodell 210 erzeugten Antworten kommen. Dies kann durch Bereitstellen eines standardisierten Ausgabeformats zumindest teilweise kompensiert werden.

Dies kann ein Vergleichen zwischen verschiedener vorhergesagter Handlungsoptionen begünstigen. So kann z.B. die zumindest eine Handlungsoption "*Löse die dritte Schraube von links am Gehäuse"* als semantisch identisch zu der zumindest einen Handlungsoption "*Am Gehäuse befinden sich vier Schrauben. Von links gesehen soll nun die dritte Schraube zuerst gelöst werden"* angesehen werden.

Bei Verwenden eines standardisierten Formats wie "*Löse*, *Schraube, Position (x,y)"* kann mittels der zumindest einen Handlungsoption auch eine syntaktische Identität erreicht werden. Dies kann die Anzahl möglicher Ausgaben deutlich eingrenzen. Ein derartiges Vorgehen kann auch dazu konfiguriert sein, möglicherweise in der zumindest einen (textuell bereitgestellten) Handlungsoption vorhandene Füllwörter zu eliminieren, was ebenfalls zu einer Reduktion des Raums der möglichen m Handlungsoptionen beitragen kann.

Die relative Häufigkeit einer jeden Handlungsoption kann mit einer Sicherheit assoziiert sein, dass diese Handlungsoption tatsächlich als die richtige Handlungsoption angesehen werden kann. Wie bereits beschrieben, kann der Roboter 120 (wie mit Bezug zur Fig. 1 beschrieben) die Handlungsoption ausführen oder ggf. bei vorhandener Unsicherheit bei einer Hilfsentität und/oder einem menschlichen Bediener weitere Informationen anfragen.

In einigen Fällen kann ein Resultat des mit Bezug zu Fig. 2 beschriebenen Vorgehens nach dessen Bestimmen auch als Zerlegungsplan in Form eines Datensatzes einer Datenbank abgespeichert werden, was mit einem als neu und bislang unbekannten Objekttyps assoziiert werden kann.

Das hierin diskutierte Verfahren kann so lange wiederholt werden, bis der Roboter 120 als Handlungsoption und/oder von einem menschlichen Bediener und/oder einer Hilfsentität die Mitteilung bekommt, dass die auszuführende Manipulation des Objekts erfolgreich abgeschlossen werden konnte.

Während dieses iterativen Vorgehens können alle bestimmten Handlungsoptionen und ggf. daraus resultierende Entscheidungen in einem Logbuch gespeichert werden, um eine Nachvollziehbarkeit aller Einzelschritte des Roboters gewährleisten zu können. Dieses Logbuch kann z.B. als zusätzliche Information in Form von Eingaben (bzw. *prompting*) oder neuer Trainingsdaten für ein Nachtraining fungieren.

In einigen Fällen kann so z.B. nachträglich festgestellt werden, ob in bestimmten Situationen andere Handlungsoptionen besser gewesen wären (z.B. im Sinne einer Feedbackfunktion). Durch das Nachtrainieren kann eine Aussagekraft der zugrundeliegenden künstlichen Intelligenz (z.B. der KI 130 wie mit Bezug zur Fig. 1 beschrieben) weiter verbessert und robuster gemacht werden.

In einigen Fällen kann sich ein Zerlegungsprozess besonders komplex gestalten. In derartigen Fällen kann es vorteilhaft sein, den Zerlegungsprozess in Teil(zerlegungs)prozesse zu unterteilen. In einigen Fällen kann vorgesehen sein, dass ein Zerlegungsprozess des Objekts in einen Zerlegungsprozess von jeweiligen Teilobjekten unterteilt wird.

In einem derartigen, komplexen Fall, kann ein Roboter zunächst die betreffende Umgebung mittels des zumindest einen Sensors (z.B. einer Kamera) untersuchen, und die dadurch gewonnenen Informationen an eine KI weiterreichen (wie hierin beschrieben). Die KI kann dazu konfiguriert sein, eine Klassifikation vorzunehmen, um eine vorliegende Aufgabenstellung (z.B. einen Zerlegungsprozess) zu erkennen. Hierzu können trainierte neuronale Netze wie z.B. YOLO, CNNs, etc. in Betracht kommen. Der auszuführende Zerlegungsprozess kann ein Erkennen des Objekttyps, des Objektherstellers und/oder der Lage des Objekts umfassen. Dabei können ähnliche Objekte in einer Objektklasse zusammengefasst werden und ein Klassifikator kann für jedes Objekt, basierend auf den erfassten Informationen, welche mit einer Umgebung des beweglichen Roboterteils assoziiert sind, bestimmen, in welche Klasse ein bestimmtes Objekt fällt. Dabei kann vorausgesetzt werden, dass ein bestimmtes Objekt in eine vordefinierte Klasse (z.B. eine der Klassen *"Batterie"* oder "*Gehäuse*") fällt. Zusätzlich kann eine Klasse für *"unbekannt"* für unbekannte Objekte vorgesehen werden (eine Zuordnung zur Klasse *"unbekannt'* kann z.B. dann erfolgen, wenn ein prozessiertes Objekt zu lediglich niedrigen (d.h. Aktivierungswerte, welche kleiner sind als die durchschnittlichen Aktivierungswerte, welche mit Objekten assoziiert sind, welche anderen Klassen als der Klasse *"unbekannt'* zugeordnet wurden) Aktivierungen führt. Zusätzlich oder alternativ kann eine Klasse für *"sonstige Objekte"* vorgesehen werden. In einigen Fällen kann das verwendete neuronale Netz für eine Klassifizierung der Klassen *"unbekannt'* und/oder *"sonstige Objekte"* trainiert worden sein.

Fig. 3 zeigt ein computer-implementiertes Verfahren 300 zum umgebungsspezifischen Bestimmen zumindest einer Handlungsoption eines beweglichen Roboterteils.

In Schritt 310 erfolgt ein Erfassen von Informationen, welche mit einer Umgebung des beweglichen Roboterteils assoziiert sind.

In Schritt 320 erfolgt ein Konvertieren der erfassten Informationen in eine Beschreibung der Umgebung.

In Schritt 330 erfolgt ein Bereitstellen der Beschreibung an ein erstes trainiertes neuronales Netz.

In Schritt 340 erfolgt ein Bestimmen, durch das erste trainierte neuronale Netz, der zumindest einen Handlungsoption basierend auf der bereitgestellten Beschreibung.

In Schritt 350 erfolgt ein Bestimmen, ob die bereitgestellte zumindest eine Handlungsoption ausreichend definiert ist, um durch das bewegliche Roboterteil ausgeführt zu werden.

In Schritt 360 erfolgt ein Initiieren eines Dialogs, mit einer von dem Roboterteil verschiedenen Hilfsentität, um weitere Kontextinformationen zu erfassen, falls bestimmt wurde, dass die bereitgestellte zumindest eine Handlungsoption nicht ausreichend definiert ist.

In Schritt 370 erfolgt ein Bereitstellen der zumindest einen Handlungsoption an eine Steuerung des beweglichen Roboterteils.

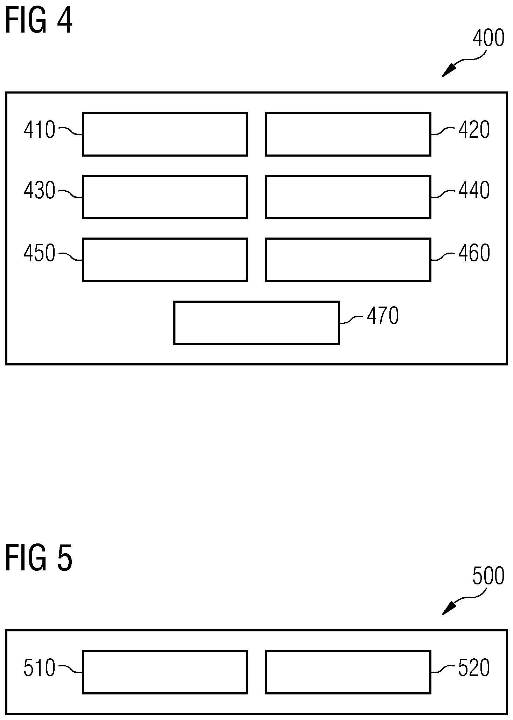

Fig. 4 zeigt eine exemplarische computer-implementierten Vorrichtung 400 zum umgebungsspezifischen Bestimmen zumindest einer Handlungsoption eines beweglichen Roboterteils. Die computer-implementierte Vorrichtung 400 umfasst eine Erfassungseinheit 410, eine Konvertierungseinheit 420, eine erste Bereitstellungseinheit 430, eine erste Bestimmungseinheit 440, eine zweite Bestimmungseinheit 450, eine Initiierungseinheit 460 sowie eine zweite Bereitstellungseinheit 470.

Die Erfassungseinheit 410 ist konfiguriert zum Erfassen von Informationen, welche mit einer Umgebung des beweglichen Roboterteils assoziiert sind.

Die Konvertierungseinheit 420 ist konfiguriert zum Konvertieren der erfassten Informationen in eine Beschreibung der Umgebung.

Die erste Bereitstellungseinheit 430 ist konfiguriert zum Bereitstellen der Beschreibung an ein erstes trainiertes neuronales Netz.

Die erste Bestimmungseinheit 440 ist konfiguriert zum Bestimmen, durch das erste trainierte neuronale Netz, der zumindest einen Handlungsoption basierend auf der bereitgestellten Beschreibung.

Die zweite Bestimmungseinheit 450 ist konfiguriert zum Bestimmen, ob die bereitgestellte zumindest eine Handlungsoption ausreichend definiert ist, um durch das bewegliche Roboterteil ausgeführt zu werden.

Die Initiierungseinheit 460 ist konfiguriert zum Initiieren eines Dialogs mit einer von dem Roboterteil verschiedenen Hilfsentität, um weitere Kontextinformationen zu erfassen, falls bestimmt wurde, dass die bereitgestellte zumindest eine Handlungsoption nicht ausreichend definiert ist.

Die zweite Bereitstellungseinheit 470 ist konfiguriert zum Bereitstellen der zumindest einen Handlungsoption an eine Steuerung des beweglichen Roboterteils.

Fig. 5 zeigt ein System 500 zum umgebungsspezifischen Bestimmen zumindest einer Handlungsoption eines beweglichen Roboterteils.

System 500 umfasst die Computer-implementierte Vorrichtung 510 wie hierin beschrieben. In einigen Fällen kann die Computer-implementierte Vorrichtung 510 wie die Computer-implementierte Vorrichtung 400 bereitgestellt werden.

System 500 umfasst das Computerprogrammprodukt 520 wie hierin beschrieben.

Obwohl die vorliegende Erfindung anhand von Ausführungsbeispielen beschrieben wurde, ist sie vielfältig modifizierbar.

Unabhängig vom grammatikalischen Geschlecht eines bestimmten Begriffes sind Personen mit männlicher, weiblicher oder anderer Geschlechteridentität mit umfasst.

### Bezugszeichenliste

- 100: Ablaufdiagramm
- 110: Sensor
- 111: Kommunikation
- 120: Roboter
- 121: Umgebungsbeschreibung
- 122: Nachricht
- 123: Frage
- 124: Hilfestellung
- 130: künstliche Intelligenz
- 131: Handlungsoption
- 132: Prompting/Trainingsdaten
- 140: Datenbank
- 150: Hilfsentität
- 151: Speichern einer neuen Situation
- 200: Verwendung eines GPT-basierten Sprachmodells
- 210: Sprachmodell
- 220: Eingabe
- 230: Antwort
- 240: Ausgabe
- 250: Häufigkeitsverteilung
- 300: Computer-implementiertes Verfahren
- 310: Schritt
- 320: Schritt
- 330: Schritt
- 340: Schritt
- 350: Schritt
- 360: Schritt
- 370: Schritt
- 400: Computer-implementierte Vorrichtung
- 410: Erfassungseinheit
- 420: Konvertierungseinheit
- 430: erste Bereitstellungseinheit
- 440: erste Bestimmungseinheit
- 450: zweite Bestimmungseinheit
- 460: Initiierungseinheit
- 470: zweite Bereitstellungseinheit
- 500: System
- 510: Computer-implementierte Vorrichtung
- 520: Computerprogrammprodukt

## Patentansprüche

1. Computer-implementiertes Verfahren (300) zum umgebungsspezifischen Bestimmen zumindest einer Handlungsoption eines beweglichen Roboterteils, umfassend:
Erfassen (310) von Informationen, welche mit einer Umgebung des beweglichen Roboterteils assoziiert sind;
Konvertieren (320) der erfassten Informationen in eine Beschreibung der Umgebung;
Bereitstellen (330) der Beschreibung an ein erstes trainiertes neuronales Netz;
Bestimmen (340), durch das erste trainierte neuronale Netz, der zumindest einen Handlungsoption basierend auf der bereitgestellten Beschreibung;
Bestimmen (350), ob die bereitgestellte zumindest eine Handlungsoption ausreichend definiert ist, um durch das bewegliche Roboterteil ausgeführt zu werden;
Initiieren (360) eines Dialogs, mit einer von dem Roboterteil verschiedenen Hilfsentität, um weitere Kontextinformationen zu erfassen, falls bestimmt wurde, dass die bereitgestellte zumindest eine Handlungsoption nicht ausreichend definiert ist; und
Bereitstellen (370) der zumindest einen Handlungsoption an eine Steuerung des beweglichen Roboterteils.

2. Computer-implementiertes Verfahren nach Anspruch 1, wobei die Hilfsentität ein menschlicher Bediener des beweglichen Roboterteils;
ein menschlicher Bediener, welcher sich remote mit dem beweglichen Roboterteil verbinden kann;
ein menschlicher Bediener, welcher sich remote mit einem Hilfsroboter in der Umgebung des beweglichen Roboterteils verbinden kann; und/oder
ein zweites trainiertes neuronales Netz ist, welches mittels einer größeren Trainingsdatenbasis trainiert wurde als das erste trainierte neuronale Netz.

3. Computer-implementiertes Verfahren nach einem der Ansprüche 1 oder 2, wobei die zumindest eine Handlungsoption des beweglichen Roboterteils mit einem Zerlegungsplan eines elektrischen Geräts und/oder einer Batterie assoziiert ist.

4. Computer-implementiertes Verfahren nach Anspruch 3, wobei das Bereitstellen der Beschreibung ein Berücksichtigen eines bereitgestellten Zerlegungsplans für das elektrische Gerät und/oder die Batterie umfasst.

5. Computer-implementiertes Verfahren nach einem der Ansprüche 3 oder 4, wobei das computer-implementierte Verfahren für jeden Schritt eines mit dem Zerlegungsplan assoziierten Zerlegungsschritts ausgeführt wird.

6. Computer-implementiertes Verfahren nach einem der Ansprüche 1-5, wobei das erste trainierte neuronale Netz und/oder das zweite trainierte neuronale Netz ein Large Language Model, LLM, bevorzugt einen generative pre-trained transformer, GPT, umfasst.

7. Computer-implementiertes Verfahren nach einem der Ansprüche 1-6, wobei das Erfassen der Informationen ferner umfasst:
Erfassen eines Objekttyps eines Objekts, welches durch das bewegliche Roboterteil manipuliert werden soll;
Erfassen eines Herstellers des Objekts; und/oder
Erfassen einer Lage des Objekts in der Umgebung.

8. Computer-implementiertes Verfahren nach Anspruch 7, wobei das computer-implementierte Verfahren, wenn das Erfassen der Informationen ein Erfassen eines Objekttyps eines Objekts umfasst, ferner ein Bestimmen einer ersten Unsicherheit umfasst, welche indikativ für eine Unsicherheit ist, mit welcher ein erfasstes Objekt einem Objekttyp zugeordnet wurde; und
Auswerten der bestimmten Unsicherheit, wobei:
wenn die bestimmte Unsicherheit einen ersten Schwellenwert überschreitet:
Ausführen, durch das bewegliche Roboterteil, der bestimmten zumindest einen Handlungsoption;
wenn die bestimmte Unsicherheit den ersten Schwellenwert unterschreitet und einen zweiten Schwellenwert überschreitet:
Anfragen einer Bestätigung, von einem menschlichen Bediener, dass die bestimmte zumindest eine Handlungsoption ausgeführt werden soll,
Ausführen, basierend auf der Bestätigung, der zumindest einen Handlungsoption;
oder
wenn die bestimmte Unsicherheit kleiner als der zweite Schwellenwert ist:
Bereitstellen zumindest einer vordefinierten Handlungsoption an einen menschlichen Bediener,
Erfassen einer Bestätigung, von dem menschlichen Bediener, dass die bereitgestellte vordefinierte Handlungsoption ausgeführt werden soll,
Ausführen der vordefinierten Handlungsoption basierend auf der erfassten Bestätigung.

9. Computer-implementiertes Verfahren nach einem der Ansprüche 1-8, wobei das Bestimmen der zumindest einen Handlungsoption ferner ein Bestimmen einer Unsicherheit, welche mit dem Bestimmen der zumindest einen Handlungsoption assoziiert ist, umfasst.

10. Computer-implementiertes Verfahren nach einem der Ansprüche 1-9, wobei das Bereitstellen der Beschreibung und das Bestimmen der zumindest einen Handlungsoption N-Mal, mit N ≥ 1, wiederholt wird; und
Bereitstellen der zumindest einen Handlungsoption basierend auf der N-maligen Wiederholung des Bereitstellens der Beschreibung und des Bestimmens der zumindest einen Handlungsoption.

11. Computer-implementiertes Verfahren nach Anspruch 10, wobei das Bereitstellen der zumindest einen Handlungsoption ferner umfasst:
Bestimmen einer Häufigkeitsverteilung der N bestimmten Handlungsoptionen;
Bestimmen einer Handlungsoption der N bestimmten Handlungsoptionen, welche mit einer maximalen Häufigkeit bestimmt wurde;
Bereitstellen der bestimmten zumindest einen Handlungsoption.

12. Computerprogrammprodukt, umfassend Befehle, die bei der Ausführung des Programms durch einen Computer diesen veranlassen, das Verfahren nach einem der Ansprüche 1-11 auszuführen.

13. Computer-implementierte Vorrichtung (400) zum umgebungsspezifischen Bestimmen zumindest einer Handlungsoption eines beweglichen Roboterteils, umfassend:
Eine Erfassungseinheit (410) zum Erfassen von Informationen, welche mit einer Umgebung des beweglichen Roboterteils assoziiert sind;
Eine Konvertierungseinheit (420) zum Konvertieren der erfassten Informationen in eine Beschreibung der Umgebung;
Eine erste Bereitstellungseinheit (430) zum Bereitstellen der Beschreibung an ein erstes trainiertes neuronales Netz;
Eine erste Bestimmungseinheit (440) zum Bestimmen, durch das erste trainierte neuronale Netz, der zumindest einen Handlungsoption basierend auf der bereitgestellten Beschreibung;
Eine zweite Bestimmungseinheit (450) zum Bestimmen, ob die bereitgestellte zumindest eine Handlungsoption ausreichend definiert ist, um durch das bewegliche Roboterteil ausgeführt zu werden;
Eine Initiierungseinheit (460) zum Initiieren eines Dialogs mit einer von dem Roboterteil verschiedenen Hilfsentität, um weitere Kontextinformationen zu erfassen, falls bestimmt wurde, dass die bereitgestellte zumindest eine Handlungsoption nicht ausreichend definiert ist; und
Eine zweite Bereitstellungseinheit (470) zum Bereitstellen der zumindest einen Handlungsoption an eine Steuerung des beweglichen Roboterteils.

14. Computer-implementierte Vorrichtung nach Anspruch 13, ferner umfassend:
Eine erste Ausführungseinheit zum Ausführen des computer-implementierten Verfahrens nach einem der Ansprüche 1-11; und/oder
Eine zweite Ausführungseinheit zum Ausführen des Computerprogrammprodukts nach Anspruch 12.

15. System (500) zum umgebungsspezifischen Bestimmen zumindest einer Handlungsoption eines beweglichen Roboterteils, umfassend:
Die Computer-implementierte Vorrichtung (510) nach einem der Ansprüche 13 oder 14; und
Das Computerprogrammprodukt (520) nach Anspruch 12.
